# EUROPEAN PATENT SPECIFICATION

(11) **EP 0 375 168 B1**
(45) Date of publication and mention of the grant of the patent: **14.07.1993**
(21) Application number: 89312233.3
(22) Date of filing: 24.11.1989
(51) Int. Cl.: G02B 6/38

(54) **Optical connector**
Optischer Stecker
Connecteur optique

(30) Priority: 21.12.1988 US 287921
(43) Date of publication of application: 27.06.1990
(73) Proprietor: THE WHITAKER CORPORATION, Wilmington, Delaware 19808 (US)
(72) Inventor: Briggs, Robert Carl, Newport Pennsylvania 17074 (US); Budd, Lloyd Royston, Harrisburg Pennsylvania 17103 (US); Thompson, Donald Wesley, Michanicsburg Pennsylvania 17055 (US); Weber, Robert Ney, Hummelstown Pennsylvania 17036 (US)
(74) Representative: Warren, Keith Stanley

(56) References cited:
- EP-A- 0 154 781
- US-A- 4 611 887
- PATENT ABSTRACTS OF JAPAN, vol. 4, no. 110 (P-22)[592], 8th August 1980; & JP-A-55 67 712

## Description

This invention relates to a connector for an optical fiber cable, wherein at least one ferrule encircles a corresponding optical fiber of the cable and aligns the optical fiber along an interior of the connector.

A known connector assembly for an optical fiber cable is disclosed in US 4 178 068. This known connector assembly is constructed for mated connection with a complimentary connector, and for aligning the optical fiber in the known connector precisely in end to end alignment with the complimentary connector. The ferrule encircles the optical fiber and aligns the optical fiber along an axis of the known connector. A coil spring biases the ferrule forwardly to prevent an air gap at the front of the optical fiber that would cause fresnel effect reflections, and allow scattered loss of optical signals being transferred between the end to end optical fibers.

The known connector assembly comprises, at least one ferrule encircling a corresponding optical fiber of the cable, a compressible spring adapted for compression upon movement of the ferrule rearwardly in response to pressure applied to a front of the ferrule.

The present invention consists in an optical fiber cable connector as defined in claim 1. US-A-4 611 887 discloses an optical fiber cable connector according to the preamble of claim 1.

An advantage of the present invention is that the connector provides for pivotal movement of the, or each, ferrule as a means for adjusting end to end alignment of the ferrule which is increasingly movable pivotally as the associated spring is compressed.

Further according to an embodiment the invention, a portion of the ferrule has a noncircular periphery that engages the connector when the ferrule is rotated. The noncircular periphery prevents excessive rotation of the ferrule, and is slidable along the connector while the ferrule is moved axially.

Further according to said embodiment, a wide range of axial movement of the ferrule is permitted without a corresponding substantial increase in the spring bias. The spring has widely spaced coils that are compressed only over the wide range of axial movement. Thereby, the connector is unimpeded during forward movement of the connector to assure connection of the connector with a complimentary connector, and the ferrule is permitted a wide range of axial movement without applying excessive pressure to the ferrule or to an optical fiber in the ferrule.

That the present invention may be more readily understood, reference will now be made, by way of example, to the accompanying drawings.

Figure 1A is a fragmentary perspective view, with parts shown exploded, of a connector and ferrules connected to an optical cable.

Figure 2A is a fragmentary perspective view of part of the connector and the ferrules and the cable partially assembled.

Figure 3A is a fragmentary plan view of part of the connector and the ferrules, illustrating axial displacement of the ferrules.

Figure 4A is a fragmentary plan view of part of the connector and the ferrules, illustrating pivotal displacement of the ferrules.

Figure 5A is a perspective view, with parts shown exploded, of one of the ferrules.

Figure 6A is a fragmentary plan view in section of part of the connector inserted into a housing.

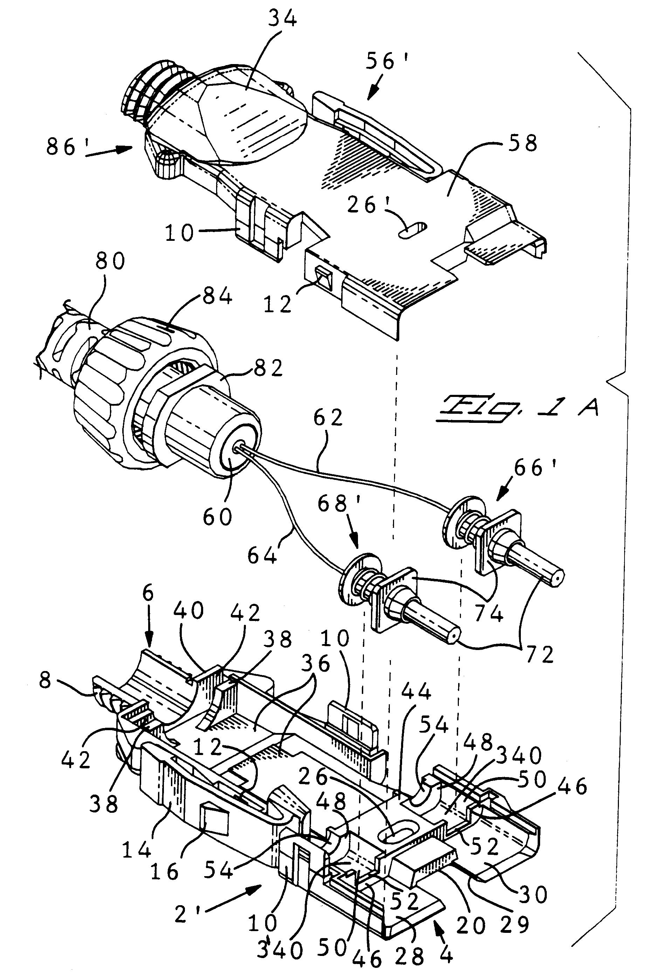

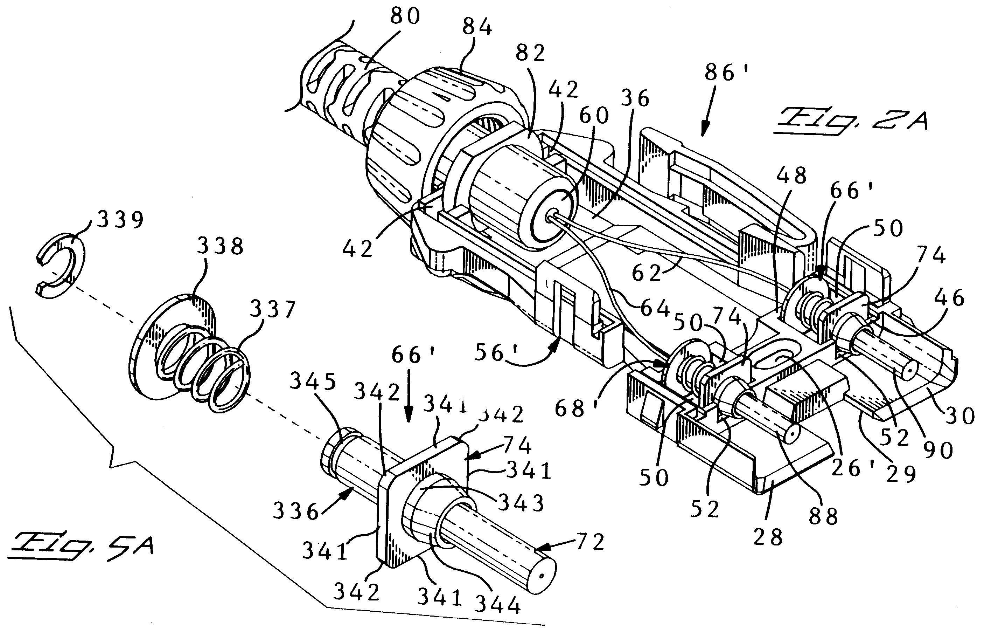

With more particular reference to Figures 1A and 2A, a portion 2' of a plug connector assembly 86' includes a front end 4 and a rear portion 6 including a cable entry 8. The portion 2' includes plug assembly latches 10 and plug assembly lugs 12, similarly as portion 56', and a latching arm 14 that includes a latching lug 16. Portion 2' has a channel 20. Aperture portion 26 extends to the interior of portion 2'. A half of a male shroud element 28 and a half of a female shroud element 30 are offset at opposite sides of the front end 4. A space or gap 29 is between elements 28 and 30 in front of the channel 20. In an interior cavity 36, interior flanges 38 and a rear wall 40 form a pair of slots 42 on opposite sides of the cable entry 8. A bulkhead 44 forms a rigid mass around the aperture 26.

Extending laterally from the bulkhead are forward ribs or ridges 46 and rearward ribs or ridges 48. Between ridges 46 and 48 are cavities 50. Recesses 52 and 54 are formed in ridges 46 and 48, respectively, and communicate with cavities 50. Recesses 54 are semicircular. Recesses 52 are rectangular in shape.

With reference to Figure 1A a second body portion 56' includes an exterior surface 58 that is substantially flat, with no channel therein. Parts of the portion 56' and corresponding parts of the above described portion 2' are referred to by the same reference numerals. An aperture portion or key element receiving passage 26' corresponds to aperture portion or key element receiving passage 26 in the portion 2'.

With reference to Figure 1A, a cable 60 having optical fibers 62 and 64 are terminated by ferrules 66' and 68', respectively. With reference to Figure 1, the cable 60 is terminated by the corresponding ferrules 66' and 68'. Each ferrule 66', 68' has a nose 72. An annular flange 74 is formed to surround a corresponding ferrule 66', 68'. Cable 60 is provided with a strain relief 80 having an integral annular flange 82. An internally threaded nut 84 is also provided.

When assembling the components illustrated in Figure 1A, ferrules 66' and 68' are seated in respective recesses 52 and 54 that are associated with ridges 46 and 48. Flanges 74 associated with the respective ferrules are seated in respective cavities 50 of portion 56'. Strain relief 80 is assembled with portion 56' with flange 82 positioned within slots 42. Optical fibers 62, 64 extend through cavity 36 extending between cable 60 and ferrules 66', 68'.

Portion 2' is brought into engagement with portion 56', and both are assembled to each other. When portion 2' and portion 56' are assembled to engage each other, ferrules 66', 68' are seated within cavities 50 and within recesses 52, 54 of portion 2' in the manner described with respect to portions 2 and 56.

Plug assembly latches 10 of portion 2' engage and latch against plug assembly lugs 12 of portion 56'. Latches 10 of portion 56' engage and latch against lugs 12 of the portion 2', thus securing the portions 2' and 56' together. Nut 84 is then threaded onto threaded cable entry portions 8, 8 completing assembly of the plug 86'.

Bulkheads 44, 44, forward ridges 46, 46 and rearward ridges 48, 48 of the portions 2', 56', respectively, engage each other when the portions 2' and 56' are brought together. This forms a substantially surrounding mass of material through the entire depth and width of the plug 86' and completely about aperture portions 26, 26'. This stiffens front end 4 of the plug connector assembly 86', resisting deformation and making rigid a rectangular exterior portion of the plug connector assembly 86' surrounding the aperture portions.

Aperture portions 26 and 26' are brought into end to end relationship, thus, forming a continuous keying element receiving passage through the plug connector assembly 86'.

When portions 2' and 56' are assembled, an assembled plug connector assembly 86' is formed. A complete male shroud portion 28 and a complete female shroud 30 are formed. Gaps 29 are formed. A pair of terminated ends 88, 90 of optical fibers extend from end 4 of the plug connector assembly 86' within the area protected by the shroud comprising portions 28 and 30. Ends 88 and 90 correspond to the nose portions 72, 72 of ferrules 66', 68'. When viewed from the end 4, the plug 86' will appear substantially rectangular in shape.

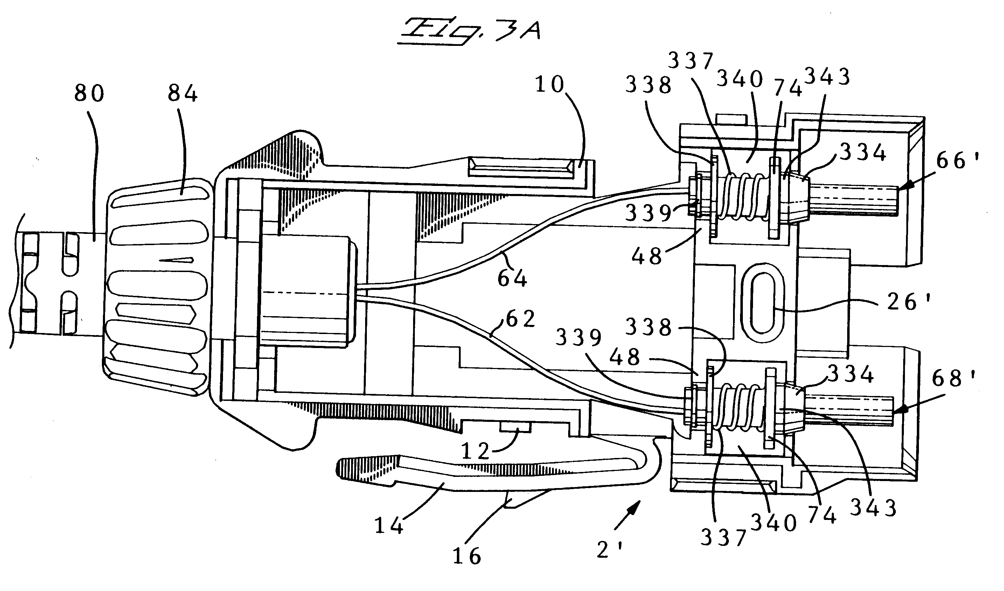

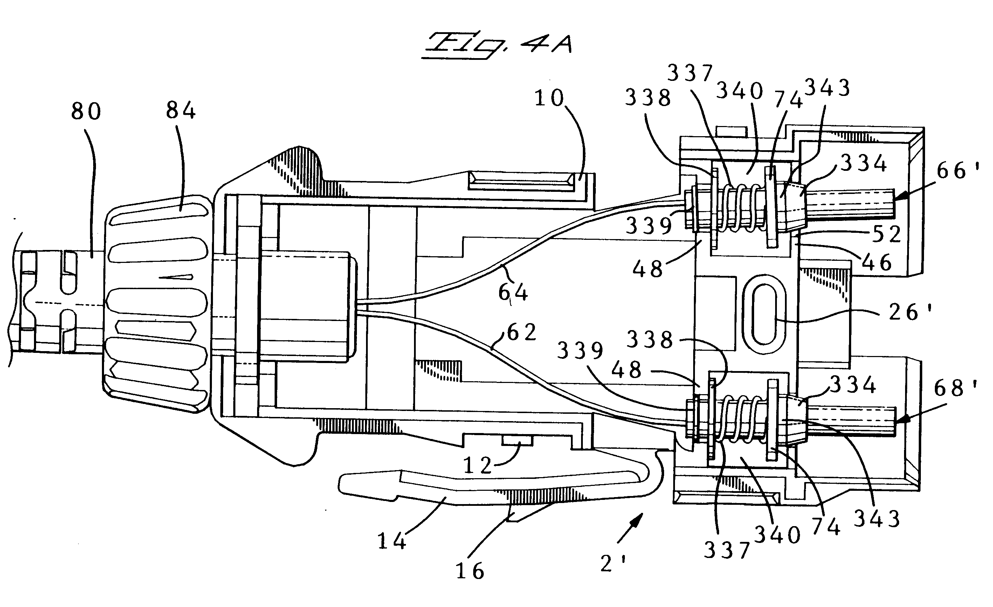

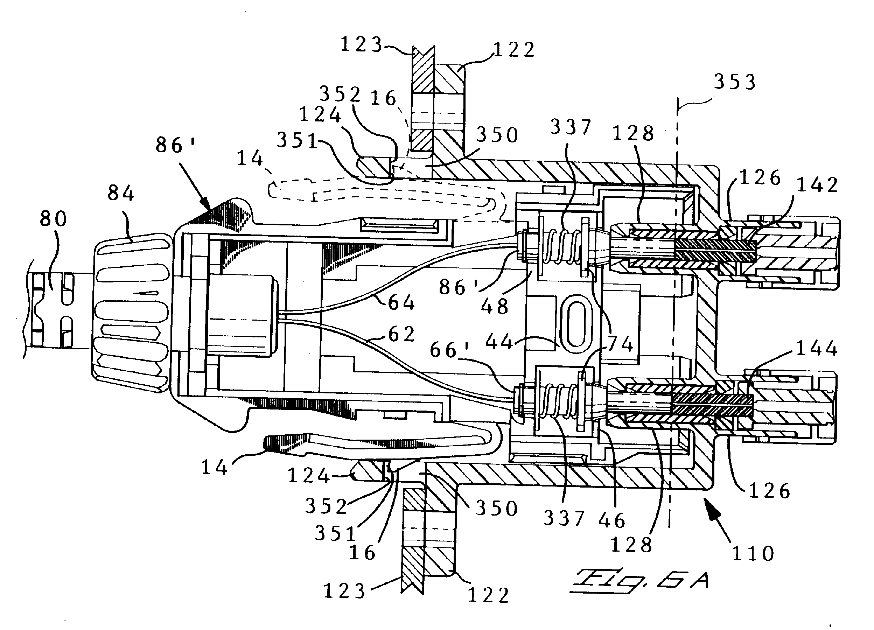

With reference to Figure 5A, the construction of ferrule 66' will be described. The description of ferrule 66' applies as well to ferrule 68' that is of a construction similar to that of ferrule 66'. The ferrule 66' includes a cylindrical nose 72 assembled concentric with the corresponding optical fiber 62. The flange 74 is on a hollow cylindrical body 336, the axis of which is coaxial with that of the nose 72. The body 336 and/or the nose 72 can be constructed of ceramic, metal, plastic or other material and assembled to provide a unitary construction. Unitary construction is meant to include also a one piece nose 72 and body 336. A coil spring 337 is assembled to encircle the body 336. The coil spring 337 has at its rear end, a washer 38 of enlarged external diameter as compared to the external diameter of a remainder of the spring 337. For example, the washer 338 can be welded unitary with the rear end of the coil spring 337. A spring clip 339 has an open side to provide the spring clip 339 with a "C" shape. The open side widens resiliently to be received over the ferrule 66', 68' in a circumferential groove 345 spaced rearward of the flange 74. The spring clip 339 is fixed in position rearward of the coil spring 337 and resists disassembly of the coil spring 337 from the body 336.

With reference to Figure 2A, the ferrules 66' and 68' are assembled with the plug portion 2', or alternatively, with the portion 26'. Thereafter, the plug portion 26' is assembled to the portion 2' to enclose the ferrules 66' and 68'. Each ferrule 66', 68' is assembled in the plug connector assembly 86' with its corresponding flange 74 and coil spring 337 in a corresponding cavity 50. Each coil spring 337 is in moderate compression between the corresponding flange 74 and a corresponding ridge 48, while the corresponding rear end 338 engages a front of a corresponding ridge 48 and while a corresponding flange 74 engages against a rear of a corresponding ridge 46. The coil spring 337 in moderate compression will retain the corresponding ferrule 66', 68' in place during assembly of the portions 2' and 56' to each other.

In addition, and with reference to Figure 3A, the coil spring 337 of each ferrule 66', 68' is adapted for compression between the corresponding ridge 48 and a corresponding flange 74 upon movement of the corresponding ferrule 66', 68' and corresponding flange 74 rearwardly of the plug connector assembly 86' in response to pressure applied to a front of the corresponding ferrule 66', 68'.

Each coil spring 337 provides a spring bias that impels a corresponding ferrule 66', 68' forwardly. The coil spring 337 is selected with a spring rate that is relatively low, thereby to produce a relatively low pressure applied to the ends of the engaged optical fibers 62, 142 and of the engaged optical fibers 64, 144. If pressure is excessive, the optical fibers will be damaged. The spring rate of the coil spring 337 is defined as the rate of increase in force produced by the coil spring 337 in proportion to the distance of compression of the coil spring 337. The force produced by the coil spring 337 provides the spring bias that urges the corresponding ferrule 66', 68' forwardly.

The axial length of each coil spring 337 is long, in comparison to that of an O-ring, to permit compression of the coil spring 337 over a wide range of axial movement of the corresponding ferrule 66', 68'. The coils of each coil spring 337 are open and spaced apart to prevent the coils from being compressed against each other. The spring rate, in addition to being relatively low, is also constant over a wide range of compression of the coil spring 337. This permits compression of the coil spring 337 over a wide range of distances, in response to axial movement of the ferrule over a corresponding range of distances, without a corresponding substantial increase in the spring bias that might apply excessive pressure to the ends of the optical fibers 66, 68, or the ferrules 66', 68'. For example, with reference to Figure 3A, each ferrule 66', 68' is illustrated as having been moved axially and rearward against the spring bias to corresponding positions shown in the Figure. The spring rate of each coil spring 337 is selected to provide a low increase in spring force corresponding to the rearward movement of the ferrule 66', 68'.

Each ferrule 66', 68' is constructed for movement to reposition itself. Each ferrule 66', 68' is permitted to move axially, rotationally and pivotally. Such movement of each ferrule 66', 68' laterally of its axis is allowed by a loose fit of the corresponding ferrule 66', 68'. Each ferrule 66', 68', including a corresponding spring clip 339, is received with a loose fit along each encircling, corresponding recess 54 of the assembled portions 2' and 56'. A periphery of each cylindrical body 336 is received with a loose fit along lateral sides of each corresponding recess 52. The lateral sides encircle a corresponding body 336 when the portions 2' and 56' are assembled together. A periphery of each flange 74 is received with a loose fit along lateral, encircling sides 340 of a corresponding cavity 50 of the assembled portions 2' and 56'.

The periphery of each said flange 74 includes multiple intersecting sides 341. Each flange 74 has a noncircular periphery, for example, a square periphery. The lateral side 340 of each said cavity 50 is straight in an axial direction. The lateral side 340 is also planar. Each flange 74 is constructed for sliding engagement with a lateral side 340 of a corresponding cavity 50 during axial movement of a corresponding ferrule 66', 68'. Chamfered corners 342 of the square periphery reduce sharp edges that might catch against the lateral side 340 of the corresponding cavity 50. Thus, the flange 74 has a transverse profile that is a square with chamfers at the corners. The flange 74 is asymmetric about the longitudinal axis of the corresponding ferrule 66', 68' such that the flange 74 can be assembled in the cavity 50 in one of a number of asymmetric orientations.

Each ferrule 66', 68' is constructed for limited pivotal movement. Forward of the flange 74, the unitary construction is provided, for example, on the body 336, with a cylindrical portion 343 and a unitary frustoconical portion 344 tapering forwardly. The transverse profile of the cylindrical portion 343 is circular. The cylindrical portion 343 is greater in transverse profile than that of the nose 74 and that of the frustoconical portion 344. The cylindrical portion 343 is lesser in transverse profile than at least a portion of the ferrule 66', 68' rearward of the cylindrical portion 343. For example, the cylindrical portion 343 is lesser in transverse profile than that of the flange 74 and fits with a loose fit in a corresponding recess 52. This loose fit allows the corresponding ferrule 66', 68' to pivot while being aligned within the corresponding recess 52,54, while the corresponding flange 74 is engaged on the corresponding ridge 46.

Upon axial movement rearwardly, the corresponding flange 74 will disengage from the corresponding ridge 46 and will move rearward. Further with reference to Figure 3A, the corresponding cylindrical portion 343 and unitary frustoconical portion 344 also will move rearward, such that the cylindrical portion 343 is removed from a corresponding recess 52, and a frustoconical portion 344 is received in the corresponding recess 52. In Figures 3A and 4A, each ferrule 66', 68' is illustrated as being moved axially rearward, with the corresponding frustoconical portion 344 received in the corresponding recess 50.

Because the frustoconical portion 344 is of relative, reduced diameter as compared to the diameter of the cylindrical portion 343, the corresponding ferrule 66', 68' is received in the corresponding recess 52, 52 with a further loose fit than before. Such a further loose fit will allow each corresponding ferrule 66', 68' to pivot while yet being aligned within the corresponding recesses 52 and 54. With reference to Figure 4A, the ferrule 66' is illustrated as being pivoted, with the frustoconical portion 344 received in the corresponding recess 50. As this Figure illustrates, the corresponding ferrule 66', 68' has an increased capacity for pivotal movement as the corresponding frustoconical portion 344 is moved into a corresponding recess 52. The low spring force of the corresponding coil spring 337 allows the coil spring to deflect transversely as each ferrule 66', 68' pivots within the constraints of a corresponding recess 52, while the corresponding ferrule 66', 68' is in a position as shown in Figure 3A or in a position as shown in Figure 4A, or in a position within a range of positions between the position as shown in Figure 3A and the position as shown in Figure 4A. Upon unmating, or disconnection of the plug 86', the pressure applied to each of the ferrules 66', 68' is relieved. The corresponding coil spring 337 will bias a corresponding ferrule 66', 68' forward axially until a corresponding flange 74 engages a corresponding ridge 46. Each ferrule 66', 68' centers itself along a corresponding recess 52 according to the following description. Each frusto covered portion 344 tapers forwardly, and will engage against lateral sides of a corresponding recess 52 to center a corresponding ferrule 66', 68' along the recess 52 until a corresponding cylindrical portion 343 is received centrally along the recess 52. The tapered construction of each frustoconical portion 344 assures that the corresponding ferrule 66', 68' will move forward without catching against the ridge 46.

Compression of the coil spring over a wide range of distances without substantial increase in the spring bias, is further advantageous, as disclosed in conjunction with Figure 6A. With reference to Figure 6A, a housing 110 is illustrated with the plug 86'. The plug connector assembly 86' is inserted into the housing 110 by applying a forward bias to impel the plug connector assembly 86' forwardly. Forward movement of the plug connector assembly 86' during insertion into the housing 110 is accompanied by movement of the latching lugs 16 into corresponding openings of latching ears 124, and by insertion of the corresponding ferrules 66', 68' into corresponding cylindrical extensions 128. The plug connector assembly 86' is moved forwardly until the corresponding latching lugs 16 are received in corresponding openings of the latching ears 124. The coil springs 337 compress to allow the corresponding ferrules 66', 68' to move rearward when they engage corresponding ferrules 142, 144.

Because compression of the coil springs 337 is attained over a large range of axial movements of the ferrules 66', 68', and because such compression develops only the aforementioned low spring force, substantially unimpeded forward movement of the plug 86' can occur, and substantially unimpeded forward movement of the lugs 16 to corresponding forward positions within the corresponding openings 350 of the ears 124 can occur, until a clearance 351 is established between each lug 16 and a rearward edge 352 of a corresponding opening 350 of each ear 124. This unimpeded forward movement of the lugs 16 to forward positions is called, overtravel. Overtravel insures that the lugs 16 are simultaneously positioned for latching within corresponding openings of the ears 124. Overtravel is attained by permitting unimpeded forward movement of the plug connector assembly 86'. Attainment of overtravel is further enhanced by the plug connector assembly 86' having a capacity for one motion of the plug connector assembly 86' during its insertion into and along the housing 110. After the plug connector assembly 86' has been fully inserted, and the forward bias on the plug connector assembly 86' has been released, the low spring force is sufficient to impel the plug connector assembly 86' rearward of the housing 110 until the lugs 16 simultaneously register against the rearward edges 352 of the openings 350 of the ears 124 to hold the plug connector assembly 86' in static position. Each spring 337 is designed to provide a force according to the following criteria. The end of each ferrule 66', 68' shall seat to an optical reference plane with a static force of 0.68 Kg. (1.5 lb.) minimum to 1.36 Kg. (3 lbs.) maximum per ferrule. In the housing 110, the reference plane is at the end of the ferrule 142 and also at the end of the ferrule 144, for example, along the centerline 353. Although the plug connector assembly 86' has been described for connection in the housing 110, the plug connector assembly 86' is constructed for connection with other forms of housings.

## Claims

1. A connector for an optical fiber cable (60) comprising; a housing (2',56') and at least one ferrule (66,68) encircling an optical fiber (62,64), wherein the, or each, ferrule (66,68) has an intermediate portion including a flange (74) of predetermined peripheral dimensions; the, or each, ferrule being disposed in an associated cavity (50) of said housing (2',56'); said cavity having a rib (46,48) which forms a part of the outside wall of said cavity (50) and which has a recess (52) having peripheral dimensions smaller than that of the flange (74); the, or each, ferrule (66,68) being disposed in its associated cavity (50) in such a manner that an end portion of the ferrule protrudes through the recess (52) in the rib (46,48), the flange (74) being inside the cavity (50); a spring (337) disposed in said associated cavity (50) being arranged to bias the flange (74) against the rib (46,48); the connector being characterized in that the peripheral dimensions of the recess (52) are greater than that of the front portion of the ferrule (66,68) such that on retraction of the ferrule (66,68) in response to a pressure applied to the front portion of the ferrule, the front portion (72) can move loosely in the recess (46,48), and in that the flange (74) comprises on its side facing the rib (46,48) a frustoconical portion (334) projecting into the recess (52) so that during its retraction the ferrule is increasingly pivotally movable within the recess.

2. A connector according to claim 1, characterised in that the housing includes parts (2',56') to be assembled together, and in that the, or each, spring (337) is in moderate compression between its associated flange (74) and rib (48) to retain the associated ferrule (66',68') in place during assembly of said parts (2',56').

3. A connector according to claim 1 or 2, characterised in that the, or each, ferrule (66',68') has a noncircular periphery engageable with a portion of the housing (2,56) during retraction of the ferrule (66',68').

4. A connector according to claim 1, 2 or 3, characterised in that the, or each, spring (337) has widely spaced coils compressible over a wide range of the retractile movement of the associated ferrule (66',68').

## Patentansprüche

1. Verbinder für ein optisches Faserkabel (60) mit einem Gehäuse (2', 56') und mindestens einem Klemmstück (66, 68), das eine optische Faser (62, 64) umgibt, wobei das oder jedes Kelmmstück (66, 68) einen mittleren Abschnitt mit einem Flansch (74) vorbestimmter Umfangsabmessungen aufweist, das oder jedes Klemmstück in einer zugehörigen Ausnehmung (50) des Gehäuses (2', 56') angeordnet ist, die Ausnehmung eine Rippe (46, 48) aufweist, die einen Teil der Außenwand der Ausnehmung (50) bildet und die eine Aussparung (52) mit Umfangsabmessungen kleiner als die des Flanschs (74) aufweist, das oder jeder Klemmstück (66, 68) in seiner zugehörigen Ausnehmung (50) in einer solchen Weise angeordnet ist, daß ein Endabschnitt des Klemmstücks durch die Aussparung (52) in der Rippe (46, 48) vorsteht, wobei sich der Flansch (74) innerhalb der Ausnehmung (50) befindet, mit einer in der zugehörigen Ausnehmung (50) angeordneten Feder (337), die dazu dient, den Flansch (74) gegen die Rippe (46, 48) zu drücken, **dadurch gekennzeichnet**, daß die Umfangsabmessungen der Aussparung (52) größer als die des Vorderabschnitts des Klemmstücks (66, 68) derart sind, daß beim Zurückziehen des Klemmstücks (66, 68) in Reaktion auf einen auf den Vorderabschnitt des Klemmstücks ausgeübtem Druck sich der Vorderabschnitt (72) lose in der Aussparung (52) bewegen kann, und daß der Flansch (74) an seiner der Rippe (46, 48) zugewandten Seite einen kegelstumpfförmigen Abschnitt (334) aufweist, der in die Aussparung (52) vorsteht, so daß das Klemmstück während seines Zurückziehens zunehmend drehbeweglich innerhalb der Aussparung bewegbar ist.

2. Verbinder nach Anspruch 1, **dadurch gekennzeichnet**, daß das Gehäuse zusammenzufügende Teile (2', 56') aufweist und daß die oder jede Feder (337) sich in leichter Zusammendrückung zwischen ihrem zugehörigen Flansch (74) und der Rippe (48) befindet, um das zugehörige Klemmstück (66', 68') während des Zusammenbaus der Teile (2', 56') in seiner Lage zu halten.

3. Verbinder nach Anspruch 1 oder 2, **dadurch gekennzeichnet**, daß das oder jedes Klemmestück (66', 68') einen nicht- kreisförmigen Umfang besitzt, der mit einem Abschnitt des Gehäuses (2, 56) während des Zurückziehens des Klemmstücks (66', 68') in Eingriff bringbar ist.

4. Verbinder nach Anspruch 1, 2 oder 3, **dadurch gekennzeichnet**, daß die oder jede Feder (337) über einen großen Teil der Rückziehbewegung des zugehörigen Klemmstücks (66, 68') zusammendrückbare, weit beabstandete Windungen aufweist.

## Revendications

1. Connecteur pour un câble (60) à fibre optique comportant : un boîtier (2', 56') et au moins une virole (66, 68) entourant une fibre optique (62, 64), dans lequel la ou chaque virole (66, 68) comporte une partie intermédiaire comprenant une bride (74) de dimensions périphériques prédéterminées ; la ou chaque virole étant disposée dans une cavité associée (50) dudit boîtier (2', 56') ; ladite cavité ayant une nervure (46, 48) qui forme une partie de la paroi extérieure de ladite cavité (50) et qui présente un évidement (52) ayant des dimensions périphériques plus petites que celles de la bride (74) ; la ou chaque virole (66, 68) étant disposée dans sa cavité associée (50) de manière que la partie extrême de la virole fasse saillie à travers l'évidement (52) dans la nervure (46, 48), la bride (74) étant à l'intérieur de la cavité (50) ; un ressort (337) disposé dans ladite cavité associée (50) étant agencé pour rappeler la bride (74) contre la nervure (46, 48) ; le connecteur étant caractérisé en ce que les dimensions périphériques de l'évidement (52) sont plus grandes que celles de la partie avant de la virole (66, 68) de manière qu'à la suite d'un retrait de la virole (66, 68) en réponse à une pression appliquée à la partie avant de la virole, la partie avant (72) puisse se déplacer librement dans l'évidement (46, 48) et en ce que la bride (74) comporte, sur son côté faisant face à la nervure (46, 48), une partie tronconique (334) faisant saillie dans l'évidement (52) afin que, pendant son retrait, la virole puisse pivoter de façon croissante à l'intérieur de l'évidement.

2. Connecteur selon la revendication 1, caractérisé en ce que le boîtier comprend des pièces (2', 56') devant être assemblées entre elles, et en ce que le ou chaque ressort (337) est en compression modérée entre sa bride associée (74) et la nervure (48) afin de retenir la virole associée (66', 68') en place pendant l'assemblage desdites pièces (2', 56').

3. Connecteur selon la revendication 1 ou 2, caractérisé en ce que la ou chaque virole (66', 68') comporte une périphérie non circulaire pouvant être engagée avec une partie du boîtier (2, 56) pendant le retrait de la virole (66', 68').

4. Connecteur selon la revendication 1, 2 ou 3, caractérisé en ce que le ou chaque ressort (337) comporte des spires largement espacées, pouvant être comprimées sur une large plage de mouvement de retrait de la virole associée (66', 68').
